# FASCICULE DE BREVET EUROPEEN

(11) **EP 1 154 645 B1**
(45) Date de publication et mention de la délivrance du brevet: **24.09.2003**
(21) Numéro de dépôt: 01470013.2
(22) Date de dépôt: 04.05.2001
(51) Int. Cl.: H04N 7/088, H04N 5/445

(54) **Procédé et dispositif d'affichage d'un sommaire de pages télétexte**
Verfahren und Vorrichtung zum Anzeigen einer Inhaltsübersicht von Teletextseiten
Method and apparatus for displaying a summary of teletext pages

(30) Priorité: 12.05.2000 FR 0006035
(43) Date de publication de la demande: 14.11.2001
(73) Titulaire: STMicroelectronics S.A., 92120 Montrouge (FR)
(72) Inventeur: Tauzia, Vincent, Technopôle Metz 2000, 57070 Metz (FR)
(74) Mandataire: Bentz, Jean-Paul

(56) Documents cités:
- EP-A- 0 637 171
- WO-A-00/19721
- GB-A- 2 254 762

## Description

L'invention a pour objet un procédé et un dispositif associé d'affichage d'un sommaire de pages télétexte. La présente invention se rapporte au domaine du télétexte, défini par exemple dans la norme ETS 300 706 de mai 1997 (ETS : en anglais, "European Standard Telecommunication") incorporé dans la description par référence.

Le télétexte est un service annexe des chaînes de télévision destiné à transmettre des informations écrites en complément des informations vidéo. Ces informations écrites sont codées sous forme de paquets de données numériques (appelés communément paquets télétexte) diffusés à des intervalles de temps réguliers correspondant au retour de trame entre deux images. Un à dix-huit paquets télétexte sont ainsi diffusés toutes les 20 ms environ.

Un écran d'un téléviseur permet d'afficher une page télétexte comportant 25 lignes de 40 caractères. Cependant, une page télétexte est en pratique définie par au plus 32 paquets télétexte numérotés X0 à X31, et dont le contenu est défini dans la norme ETS. Pour chaque page, il est ainsi transmis :
- un paquet X0, dit paquet d'en-tête (ou "Header Packet"), qui contient notamment des informations relatives au numéro de la page qu'il concerne,
- au plus 25 paquets X1 à X25, dits "paquets normaux" (ou "normal packets") contenant les caractères à afficher sur l'écran de télévision, chaque paquet correspondant à une ligne à afficher.
- des paquets dits "non affichables" (ou "non displayable packets"), X26, X27, X28, X29, X30 ou X31, qui contiennent entre autre des informations pour la mise en forme des caractères à afficher et des informations relatives à des liens vers d'autres pages télétexte.

Un programme télétexte complet d'une chaîne de télévision comprend par exemple 500 pages, qui sont éventuellement associées pour former des ensembles logiques appelés magazines, chaque magazine comportant un nombre variable de pages télétexte. Par exemple, la chaîne de télévision peut proposer quatre magazines ayant pour thème les sports, la finance, les nouvelles internationales et la météo. La diffusion complète d'un programme télétexte dure environ 40 s, et l'ensemble des pages télétexte est diffusé de manière cyclique. Dit autrement, une même page est diffusée toutes les 40 s environ, ce qui permet à la chaîne de télévision de mettre à jour très régulièrement le contenu informatif de ses pages ou de créer des effets d'animation.

Pour afficher une page souhaitée, un décodeur télétexte d'un récepteur de télévision recherche tout d'abord la page souhaitée en décodant le numéro de page associé à chaque paquet X0 reçu, puis le décodeur recopie l'ensemble des paquets de la page souhaitée dans une mémoire d'affichage. Cette dernière est lue en permanence par des moyens d'affichage de l'écran du téléviseur afin d'afficher son contenu sur l'écran.

Le plus souvent, lorsqu'on lance le service télétexte d'une chaîne de télévision, le décodeur recherche automatiquement et affiche dès réception la page 100 qui est par exemple une page d'introduction du programme. Sur la page 100 sont présentés notamment les différents magazines ainsi que les numéros de la première page de chaque magazine. Pour accéder à un magazine particulier, l'utilisateur compose alors le numéro de page associé à la première page du magazine souhaité à l'aide d'une télécommande ou d'un clavier de commande. L'utilisateur peut également accéder à une page particulière d'un magazine en composant le numéro correspondant de la page souhaitée. Ceci n'est bien sûr possible que si l'utilisateur connaît le numéro de la page souhaitée. Or, le contenu d'une page ayant un numéro donné est susceptible de changer entre deux diffusions du même programme. De plus, un même numéro de page peut correspondre à des magazines différents d'une chaîne de télévision à l'autre. Il n'est donc pas toujours aisé pour l'utilisateur de retrouver le numéro d'une page traitant d'un sujet souhaité.

Des systèmes de navigation existent, qui permettent d'accéder à une page traitant d'un sujet souhaité, sans nécessairement connaître le numéro de page correspondant.

Un premier système de navigation, le système FLOF couramment utilisé en France, en Angleterre ou en Espagne, est basé sur un système de choix de couleurs. En bas de chaque page, la 24^{ième} ligne affichée sur l'écran comprend plusieurs labels, correspondant chacun à un lien vers une autre page du programme. La 24^{ième} ligne affichée correspond au paquet X24 diffusé.

Un label est une chaîne de caractères, comprenant éventuellement un ou plusieurs mots, qui permet à l'utilisateur d'identifier le contenu de la page correspondante, un label peut également contenir le numéro de la page correspondante, codé sous forme décimale pour être compréhensible par l'utilisateur.

Le système FLOF associe à chaque label un code couleur qui correspond par exemple à la couleur de fond sur laquelle est affiché le label.

Pour demander l'affichage d'une des pages dont le label est affiché en bas de la page en cours d'affichage, l'utilisateur choisit simplement le code couleur associé au label choisi. Ce choix est fait par exemple par l'intermédiaire de la télécommande ou du clavier de commande associé au téléviseur, qui comportent dans ce cas des boutons colorés. Le décodeur va ensuite lire, dans le paquet de commande X27 de la page en cours d'affichage, le numéro de page associé au label choisi ; Le paquet X27 contient en effet les numéros de page associés à chaque label du paquet X24 correspondant de la page en cours d'affichage, ces numéros de page étant codés sous forme de nombres binaires. La page souhaitée est finalement chargée, c'est-à-dire recherchée et copiée dans la mémoire d'affichage par le décodeur, puis affichée à l'écran.

Le système de navigation FLOF est pratique car il ne nécessite pas la connaissance des numéros de page pour afficher et consulter une page souhaitée.

Cependant, le nombre de liens (ou de labels) affichés sur une même page est limité à six, et le plus souvent seulement quatre sont utilisés. Il est donc parfois nécessaire d'afficher plusieurs pages non souhaitées avant d'afficher une page souhaitée. Par exemple, si l'utilisateur souhaite consulter une page relative à la bourse de Paris, il sera peut-être nécessaire pour lui d'afficher d'abord la première page du magazine financier, puis la première page d'une rubrique concernant les différentes places boursières internationales avant de pouvoir afficher la page concernant précisément la bourse parisienne, c'est-à-dire la page souhaitée. Dans certains cas, il peut être nécessaire d'afficher jusqu'à une dizaine de pages avant d'obtenir la page souhaitée, ce qui se traduit par un temps d'accès à certaines pages relativement long.

Un système de navigation tel que le système FLOF est également figé car le contenu des paquets X24 et X27 associés à chaque page télétexte du programme correspond à des choix effectués par le fournisseur du service. L'utilisateur ne peut pas choisir ses propres liens en fonction de ses propres besoins.

Un second système de navigation, le système TOP (ou "Table of Pages"), est couramment utilisé dans les pays germanophones. Avec chaque ensemble de pages ou programme, sont transmis en complément des paquets non affichables de hiérarchisation des pages qui contiennent une définition des liens associés à chaque page. Ces paquets sont mémorisés à chaque réception du programme. Avec un tel système, la hiérarchisation se fait à trois niveaux. Chaque magazine est divisé en un ensemble d'un nombre variable de rubriques, chaque rubrique étant divisée en un nombre variable de pages. Lors de l'affichage d'une page souhaitée, le décodeur affiche par exemple en bas de la page, sur la 24^{ième} ligne, les labels "page précédente", "page suivante", "rubrique suivante" et "magazine suivant". Lorsque l'utilisateur a fait son choix, par l'intermédiaire de boutons colorés associés aux différents labels ou bien par l'intermédiaire de boutons de commande de déplacement et de sélection d'un label, le décodeur associe le choix effectué avec un numéro de page correspondant contenu dans les paquets de hiérarchisation. Enfin, le décodeur recherche la page souhaitée et la mémorise dès réception dans la mémoire d'affichage. Un système de navigation tel que le système TOP permet ainsi à l'utilisateur d'aller facilement d'une page à la suivante ou d'une rubrique à la suivante. Cependant, si l'utilisateur est seulement intéressé par une première et une troisième rubrique, il devra malgré tout demander l'affichage de la deuxième rubrique, avant d'accéder à la troisième.

Ainsi les systèmes actuels de navigation pour service télétexte sont faciles à utiliser car il n'est pas nécessaire de connaître le numéro d'une page souhaitée pour y accéder. Cependant, leur utilisation nécessite le plus souvent des temps assez longs pour accéder à l'information souhaitée. En effet, il est souvent nécessaire de charger et d'afficher plusieurs pages avant d'obtenir une page souhaitée.

Pour limiter les temps de chargement d'une page télétexte, il est possible d'utiliser un décodeur comportant une mémoire tampon de taille suffisante pour mémoriser plusieurs pages télétexte, voire l'ensemble des pages d'un programme diffusé par une chaîne de télévision. C'est notamment le cas des téléviseurs haut de gamme. Dans ce cas, lors du lancement du service télétexte, le décodeur mémorise tout d'abord tout ou partie du programme puis affiche la page d'introduction. Ensuite, lorsqu'une page souhaitée doit être affichée, elle est simplement recopiée depuis la mémoire tampon dans la mémoire d'affichage, ce qui est rapide. En parallèle, le contenu de la mémoire tampon est rafraîchi en continu, au fur et à mesure de la réception des pages télétexte. L'affichage d'une page souhaitée est immédiat, car il n'est plus nécessaire d'attendre la réception de cette page souhaitée pour pouvoir l'afficher. Cependant, si le téléviseur est utilisé avec un système de navigation TOP ou un système FLOF, l'utilisateur devra malgré tout afficher à l'écran éventuellement plusieurs pages avant d'atteindre la page souhaitée, ce qui est pénible et inutile.

Le document D1 (WO 00 19721 A) dévoile un procédé qui permet à un utilisateur d'un service télétexte, de choisir des pages préférées et de mémoriser, sur demande de l'utilisateur, le numéro correspondant dans une liste de pages préférées. L'accès de l'utilisateur aux pages dont le numéro est contenu dans la liste de pages préférées est facilité.

Un but de l'invention est de mettre en oeuvre un procédé et de réaliser un dispositif qui permet à l'utilisateur d'accéder facilement et rapidement à une page télétexte souhaitée, en supprimant notamment la nécessité d'afficher des pages intermédiaires non désirées.

Un autre but de l'invention est de mettre en oeuvre un procédé et de réaliser un dispositif qui permet de donner rapidement à l'utilisateur un aperçu complet de l'ensemble du programme télétexte d'une chaîne de télévision.

L' invention concerne un procédé d' affichage d'un sommaire de programme télétexte sun un écran récepteur de télévision, tel que défini dans la revendication 1.

L' invention concerne également un dispositif récepteur de signaux de télévision, tel que défini dans la revendication 11.

Avec ces objectifs en vue, l'invention a pour objet un procédé d'affichage d'un sommaire de programme télétexte sur un écran de récepteur de télévision, le programme télétexte comprenant plusieurs pages télétexte, chaque page télétexte étant diffusée sous forme d'un ensemble de paquets de données, le procédé étant caractérisé en ce qu'il comprend les étapes suivantes :
- réception d'une page télétexte dont l'ensemble des paquets de données comprend un premier paquet de données comportant au moins un label faisant référence à une autre page télétexte et un deuxième paquet de données associé au premier paquet et comportant un numéro de page associé à l'au moins un label,
- décodage des premier et deuxième paquets de données pour obtenir l'au moins un label et le numéro de page associé, et
- mémorisation de l'au moins un label et du numéro de page associé dans une mémoire tampon.

Le premier paquet de la page télétexte reçue peut également comprendre plusieurs labels, chaque label faisant référence à une autre page télétexte, dans ce cas, le deuxième paquet de la page télétexte reçue comporte un numéro de page associé à chaque label du premier paquet.

De préférence, les étapes de réception, de décodage et de mémorisation sont effectuées de manière cyclique, à chaque réception d'une page télétexte du programme, pour mettre à jour le contenu de la mémoire tampon.

Selon un mode de réalisation, le procédé peut également comprendre l'étape suivante, effectuée sur demande de l'utilisateur : - affichage d'un sommaire du programme télétexte à partir du contenu de la mémoire tampon.

L'étape d'affichage du sommaire comprend de préférence les étapes suivantes : - lecture, dans la mémoire tampon, des labels et des numéros de page associés, et - création du sommaire, le sommaire comprenant une ou plusieurs pages comprenant chacune une liste de labels et de numéros de pages associés.

L'invention utilise des informations extraites des premier et deuxième paquets de données et déjà utilisées par ailleurs, pour créer une ou plusieurs pages de sommaire répertoriant l'ensemble du programme télétexte. Avec l'invention, l'utilisateur peut à tout moment rechercher aisément une page télétexte souhaitée et obtenir immédiatement son numéro. Il peut également sélectionner rapidement dans le sommaire, en utilisant des boutons de déplacement et de sélection d'un clavier de commande par exemple, le label d'une page télétexte souhaitée pour demander son affichage. Avec l'invention, l'affichage de la page souhaitée est rapide car il n'est plus nécessaire de demander l'affichage de pages télétexte intermédiaires pour avoir accès à la page télétexte souhaitée.

L'invention est de plus facile à mettre en oeuvre dans la mesure où les premier et deuxième paquets de données sont déjà diffusés systématiquement pour chaque page télétexte. L'invention utilise ainsi une information déjà présente pour fournir un système de navigation plus convivial et plus simple d'utilisation que les systèmes de navigation connus.

L'invention a également pour objet un dispositif récepteur de signaux de télévision comprenant :
- une antenne de réception pour recevoir des pages d'un service télétexte, l'antenne étant couplée à un démodulateur par l'intermédiaire d'un récepteur de signaux de télévision,
- un décodeur télétexte couplé au démodulateur et comprenant une mémoire d'affichage, et
- un écran comportant des moyens d'affichage pour lire et afficher le contenu de la mémoire d'affichage.

Selon l'invention, le décodeur télétexte comprend également des moyens pour mettre en oeuvre un procédé d'affichage d'un sommaire précédemment décrit, les moyens comportant au moins une mémoire tampon.

Selon un mode de réalisation, les moyens de mise en oeuvre du procédé comprennent un ensemble de portes logiques.

Selon un autre mode de réalisation, les moyens de mise en oeuvre du procédé comprennent des moyens logiciels constitués d'un ensemble d'instructions mémorisé dans une mémoire du décodeur.

L'invention sera mieux comprise et d'autres caractéristiques et avantages apparaîtront à la lecture de la description qui va suivre d'un exemple de procédé d'affichage conforme à l'invention, la description faisant référence aux dessins annexés dans lesquels :
- la figure 1 est un diagramme de mise en oeuvre d'un affichage de sommaire de programme télétexte, selon l'invention,
- la figure 2 est un dispositif pour la mise en oeuvre du procédé d'affichage selon l'invention.

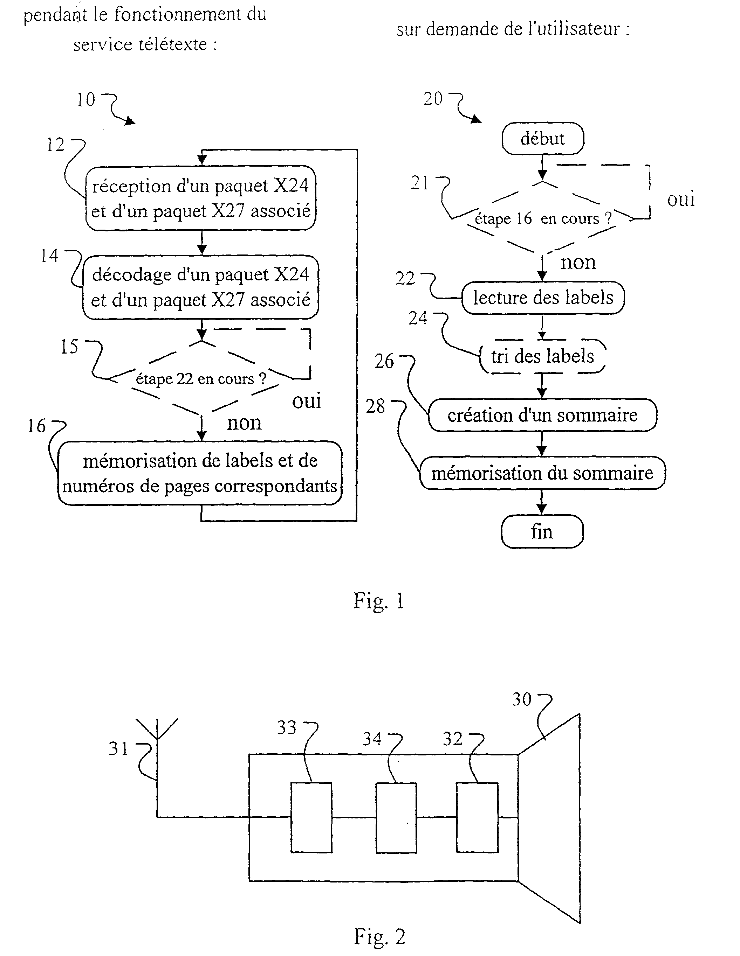

Dans l'exemple ci-dessous, le procédé de l'invention (figure 1) est utilisé pour construire un sommaire complet d'un programme télétexte reçu, lorsqu'un utilisateur du service télétexte le demande. Les informations nécessaires à l'affichage du sommaire sont en parallèle mises à jour régulièrement pendant toute la durée d'utilisation du service télétexte. On suppose par ailleurs dans l'exemple qu'une chaîne de télévision proposant le programme télétexte, diffuse un nombre N = 20 de pages télétexte et que le sommaire complet comprend une seule page, c'est-à-dire qu'il peut être affiché en une seule fois sur l'écran. Le programme complet (les N pages) est diffusé par la chaîne en continu et de manière cyclique pendant toute la durée d'utilisation du service.

Dans l'exemple, le procédé de l'invention est mis en oeuvre dans un récepteur de signaux de télévision (figure 2), qui comprend notamment un écran 30, une antenne 31 couplée à un décodeur 32 par l'intermédiaire d'un récepteur 33 et d'un démodulateur 34 de signaux de télévision.

Le décodeur 32 (non détaillé sur la figure 2) comprend notamment une mémoire d'affichage qui est lue en permanence par des moyens d'affichage de l'écran (non représentés). Le décodeur 32 comprend également des moyens pour mettre en oeuvre le procédé de l'invention, qui seront détaillés ultérieurement.

Dans l'exemple, le procédé d'affichage selon l'invention comprend, conformément à la figure 1, une première étape 10 d'acquisition des données nécessaires à la réalisation d'un sommaire, et une deuxième étape 20 d'affichage du sommaire. La première étape 10 est effectuée en continu, pour chaque page télétexte diffusée et pendant toute la durée de fonctionnement du service télétexte. Par contre la deuxième étape 20 d'affichage du sommaire est exécutée uniquement sur demande de l'utilisateur du service.

La première étape 10 comprend des sous-étapes 12, 14, 16 de réception, de décodage et de mémorisation des informations nécessaires à la réalisation du sommaire.

Au cours de l'étape 12, le décodeur du récepteur de télévision reçoit les paquets de données d'une page télétexte, et notamment les paquets X24 et X27 de la dite page.

Comme il a été exposé précédemment, le paquet X24 d'une page télétexte contient un ensemble de labels, le plus souvent un nombre inférieur à quatre et éventuellement nul. Les labels représentent des liens vers d'autres pages du programme télétexte. Le paquet X27 associé contient quant à lui les numéros de pages associés à chaque label du paquet X24 correspondant et codés sous forme de nombres binaires. Un label est une chaîne de caractères, comprenant un ou plusieurs mots, qui permet à l'utilisateur d'identifier le contenu de la page correspondante. Avantageusement, un label comprend également un mot indiquant le numéro de la page correspondante, sous forme décimale. Par exemple, un label tel que "SPORT : 150" indique à l'utilisateur que le magazine sportif commence à la page 150 du programme.

Au cours de l'étape 14, le décodeur décode les paquets X24, X27 pour associer à chaque label du paquet X24, le numéro de page correspondant contenu dans le paquet X27.

Au cours de l'étape 16, les couples label/numéro de page obtenus à la fin de l'étape 14, s'il y en a, sont mémorisés dans une mémoire tampon. Bien sûr, si une précédente valeur d'un couple label/numéro de page est déjà mémorisée dans la mémoire tampon, alors cette précédente valeur est effacée et/ou est remplacée par la nouvelle valeur.

Les couples label/numéro de page sont par exemple mémorisés par ordre alphabétique des labels. Cette solution simple évite les redondances et la mémorisation inutile d'un même couple label/numéro de page en deux points différents de la mémoire tampon. Ce risque n'est en effet pas négligeable car un même label peut être contenu dans plusieurs paquets X24.

D'autres solutions peuvent bien sûr être envisagées. Par exemple, les couples label/numéro de page peuvent être classés par ordre croissant des numéros de pages. Ce classement est cependant moins intéressant car deux labels différents peuvent faire référence à une même page et des informations peuvent éventuellement être perdues.

A la fin de la sous-étape 16, une nouvelle étape 10 est réalisée. L'étape 10 est réalisée ainsi en continu, pendant toute la durée d'utilisation du service télétexte. Ceci permet de mettre à jour le contenu de la mémoire tampon.

La deuxième étape 20 d'affichage du sommaire est réalisée en parallèle à la réalisation de la première étape 10, et uniquement sur demande de l'utilisateur. Dans l'exemple de la figure 1, l'étape 20 comprend quatre sous-étapes 22, 24, 26, 28 qui sont des sous-étapes de lecture et de tri des labels, de création et de mémorisation du sommaire.

Au cours de l'étape 22, les labels sont lus dans la mémoire tampon. Au cours de l'étape 24, les labels et numéros associés sont triés et classés, par exemple, par ordre alphabétique des labels. Ils peuvent également être classés par thème, par regroupement des labels comprenant une partie de chaînes de caractères commune par exemple. D'autres types de tri peuvent être envisagés, l'essentiel étant de répertorier l'ensemble des labels, de préférence de la manière la plus facilement compréhensible par l'utilisateur. L'étape de tri 24 n'est pas indispensable et peut éventuellement être supprimée ; cette étape vise simplement à faciliter l'utilisation future du sommaire.

L'étape de création du sommaire 26 consiste à créer un menu qui comprend, de même qu'une page du programme télétexte, éventuellement un paquet X0, au plus 23 paquets X1 à X23 et éventuellement des paquets X24 à X31.

Un menu est un ensemble d'informations écrites qui est généré par le décodeur télétexte, et non pas diffusé par une chaîne de télévision. Un menu peut également être mémorisé dans une mémoire du décodeur et/ou être affiché sur l'écran. Un menu peut contenir plusieurs pages, si son contenu est trop important pour être affiché en une seule fois sur l'écran. Des menus autres que le menu sommaire existent et sont connus par ailleurs. Par exemple, un menu contenant des conseils de réglage du son ou de l'image du récepteur, peut être affiché sur l'écran à la mise sous tension du décodeur télétexte.

Les paquets X0 à X31 du menu sommaire sont définis de la manière suivante. Le paquet X0 est un paquet d'entête qui comprend notamment une indication du contenu des paquets X1 à X31 suivants, par exemple sous la forme de la chaîne de caractères "sommaire", et un numéro de page différent des numéros des pages télétexte du programme.

Les paquets X1 à X23 du menu sommaire, dits paquets normaux, contiennent les labels précédemment mémorisés dans la mémoire tampon et qui constituent le contenu informatif du sommaire. Chaque paquet normal comprend l'ensemble des caractères à afficher sur une même ligne de l'écran. Aussi, selon la taille des labels (le nombre de caractères qui les constituent), un même paquet pourra comprendre un ou plusieurs labels, ou simplement une partie de labels. Pour un programme comportant N = 20 pages télétexte, on pourra par exemple créer 20 paquets X2 à X21 comportant chacun un label.

Les paquets X24, X25, X26, X27, X28, X29, X30 ou X31, contiennent notamment des informations relatives à la mise en forme du contenu des paquets normaux du menu sommaire lors de leur affichage, et éventuellement des informations relatives à des liens vers d'autres pages télétexte du programme. Ces paquets ne sont pas indispensables à la réalisation du sommaire et peuvent éventuellement ne pas être créés.

Au cours de la réalisation de l'étape 28, l'ensemble des paquets X0 à X31 du menu sommaire créée est ensuite mémorisé dans la mémoire d'affichage qui est lue en permanence par les moyens d'affichage de l'écran du téléviseur afin d'afficher son contenu sur l'écran.

Dans l'exemple ci-dessus d'un programme télétexte comportant N = 20 pages, l'ensemble des labels du programme est mémorisé dans seulement 20 paquets de données à afficher, X2 à X21 et le procédé fournit une menu sommaire contenant une unique page. De plus, chaque label affiché dans le sommaire comprend le numéro (en base décimal) de la page correspondante. Dans ce cas, pour utiliser le sommaire affiché et demander l'affichage d'une page télétexte souhaitée du programme, l'utilisateur repère simplement le numéro de page contenu dans le label de la page télétexte choisie.

Une variante du procédé de la figure 1 est notamment intéressante pour des programmes comportant un grand nombre de pages télétexte, par exemple N = 100 pages, et pour lesquels il est nécessaire de créer un menu sommaire contenant plusieurs pages pour répertorier l'ensemble des labels de toutes les pages télétexte du programme. Pour cette variante, les étapes 26 et 28 sont modifiées de la manière suivante.

Au cours de la réalisation de l'étape 26, il est créé un sommaire de plusieurs pages, autant de pages de sommaire que nécessaire pour répertorier l'ensemble des labels contenus dans la mémoire tampon et mémorisés au cours des réalisations successives de l'étape 16. Par exemple, pour un programme de 100 pages télétexte, il pourra être créé cinq pages de sommaire, chaque page contenant 20 labels indiquant le sujet traité dans 20 pages télétexte différentes.

Chaque page de sommaire créée comprend, de même qu'une page télétexte du programme diffusé, un paquet X0, au plus 23 paquets X1 à X23, et éventuellement des paquets X24 à X31 définis de la manière suivante.

Le paquet X0 d'en-tête comprend notamment une indication du contenu de la page, et un numéro de page. Bien sûr, deux pages de sommaire différentes comportent des numéros de page différents. Les paquets X1 à X23 comportent des labels contenus dans la mémoire tampon et éventuellement classés, par ordre alphabétique ou par thème.

Le paquet X24 comporte des labels de type "page suivante" et/ou "page précédente", les labels contenant en outre éventuellement le numéro (sous une forme lisible par l'utilisateur) des pages de sommaire correspondantes, pour permettre à l'utilisateur d'avoir accès aisément à toutes les pages du menu sommaire.

Le paquet X27, s'il existe, contient les numéros de page du menu sommaire associés aux labels du paquet X24 et codés sous forme de nombres binaires.

Enfin, les paquets X25, X26, X28, X29, X30 ou X31, s'ils existent, comprennent notamment des informations de mise en forme du contenu des paquets X1 à X23 lors de leur affichage à l'écran.

Au cours de la réalisation de l'étape 28, toutes les pages créées au cours de la réalisation de l'étape 26 précédente, sont ensuite mémorisées dans une deuxième mémoire tampon. Puis une page (de préférence la première) du menu sommaire créé est recopiée depuis la deuxième mémoire tampon vers la mémoire d'affichage pour afficher immédiatement le début du sommaire.

Il est à noter que les première et deuxième mémoires tampon, utilisées pour mémoriser d'une part les couples label/numéro de page lors de l'étape 16, et d'autre part le sommaire complet lors de l'étape 28, peuvent être remplacées par une unique mémoire tampon comprenant une première zone pour mémoriser le contenu des paquets X24, X27 des pages du programme, et une deuxième zone pour mémoriser le sommaire créé.

Il est à noter également qu'il n'est pas indispensable de créer des paquets X27 associés aux paquets X24 pour les pages de sommaire si les numéros de page sont déjà inscrits dans les labels contenus dans les paquets X24 et donc affichés à l'écran. En effet, dans ce cas, l'utilisateur peut demander l'affichage d'une page de sommaire souhaitée en composant directement le numéro de la page de sommaire souhaitée sur le clavier de commande ou la télécommande du récepteur. Cependant, l'ajout de paquets X27 facilite l'usage du sommaire en permettant de consulter l'ensemble des pages du sommaire (et éventuellement de choisir une page) en utilisant seulement des touches de déplacement et de sélection ou des boutons colorés par exemple.

Il est à noter enfin que le procédé et le dispositif décrit ci-dessus en relation avec les figures 1 et 2 ne sont que des exemples non limitatifs de mise en oeuvre de l'invention. En particulier, toutes les valeurs numériques sont données simplement à titre indicatif et peuvent évidemment être modifiées.

Dans une autre variante du procédé de l'invention, les étapes 10, 20 comprennent des sous-étapes de test 15, 21 (représentées en pointillés sur la figure 1).

Lors de la réalisation de l'étape 15, il est vérifié si une étape 22 de lecture de la mémoire tampon est en cours de réalisation. Si le test est négatif, la mémoire tampon est libre d'accès et l'étape 16 de mémorisation est effectuée. Au contraire, si une étape 22 est en cours de réalisation, alors une nouvelle étape de test 15 est effectuée.

De la même façon, lors de la réalisation de l'étape 21, il est vérifié si une étape 16 de mémorisation de labels est en cours de réalisation ou pas. Si le test est négatif, la mémoire tampon est libre d'accès et l'étape 22 de lecture est effectuée. Au contraire, si une étape 16 est en cours de réalisation, alors une nouvelle étape de test 21 est effectuée.

Cette variante est particulièrement intéressante dans le cas assez fréquent où la mémoire tampon ne peut être utilisée à la fois en lecture et en écriture. L'ajout des étapes de test 15, 21 permet alors d'éviter les éventuels confits d'accès.

Le procédé de l'invention, dont un exemple est décrit ci-dessus, est mis en oeuvre par le décodeur d'un récepteur de signaux de télévision, tel que celui de la figure 2, par des moyens prévus à cet effet, c'est-à-dire des moyens pour créer et afficher à l'écran une ou des pages de sommaire à partir d'un ensemble de pages télétexte transmises au récepteur sous forme de paquets de données numériques.

Lesdits moyens comprennent notamment une première mémoire tampon pour mémoriser les labels et numéros de pages au cours des réalisations de l'étape 16, et éventuellement une deuxième mémoire tampon pour mémoriser des pages du sommaire au cours de la réalisation de l'étape de mémorisation 28. Bien sûr, les première et deuxième mémoires peuvent être remplacées par deux zones distinctes d'une même mémoire.

Selon un mode préféré de réalisation, les dits moyens comprennent en outre des moyens logiciels constitués d'un ensemble d'instructions mémorisées dans une mémoire du décodeur prévue à cet effet. Selon un autre mode de réalisation, les dits moyens comprennent un ensemble de portes et circuits logiques ayant une fonction similaire.

## Revendications

1. Procédé d'affichage d'un sommaire de programme télétexte sur un écran de récepteur de télévision, le programme télétexte comprenant plusieurs pages télétexte, chaque page télétexte étant diffusée sous forme d'un ensemble (X0 à X31) de paquets de données, le procédé étant **caractérisé en ce qu'**il comprend
* une étape d'acquisition (10) comprenant les sous-étapes suivantes :
- réception (12) d'une page télétexte dont l'ensemble des paquets de données (X0 à X31) comprend un premier paquet de données (X24) comportant au moins un label faisant référence à une autre page télétexte et un deuxième paquet de données (X27) associé au premier paquet (X24) et comportant un numéro de page associé à l'au moins un label,
- décodage (14) des premier et deuxième paquets de données (X24, X27) pour obtenir l'au moins un label et le numéro de page associé, et
- mémorisation (16) de l'au moins un label et du numéro de page associé dans une mémoire tampon, et
* une étape d'affichage du sommaire (20), effectuée sur demande de l'utilisateur et comprenant les sous-étapes suivantes :
- création (26) du sommaire, le sommaire comprenant une ou plusieurs pages comprenant chacune une liste de labels et de numéros de pages associés mémorisés lors de l'étape d'acquisition (10), et
- affichage d'une page du sommaire (28).

2. Procédé selon la revendication 1, **caractérisé en ce que** l'étape d'acquisition (10), comprenant les sous-étapes de réception (12), de décodage (14) et de mémorisation (16), est effectuée de manière cyclique, à chaque réception d'une page télétexte du programme, pour mettre à jour le contenu de la mémoire tampon.

3. Procédé selon l'une des revendications 1 ou 2, **caractérisé en ce que** le premier paquet (X24) de la page télétexte reçue comprend plusieurs labels, chaque label faisant référence à une autre page télétexte, **en ce que** le deuxième paquet (X27) de la page reçue comporte un numéro de page associé à chaque label du premier paquet (X24), et **en ce que** plusieurs labels et numéros de pages associés sont mémorisés lors de l'étape de mémorisation (16).

4. Procédé selon la revendication 1, **caractérisé en ce que** l'étape d'affichage (20) comprend également une étape de lecture (22), dans la mémoire tampon, des labels et des numéros de page associés, la dite étape de lecture étant réalisée avant l'étape de création (26) du sommaire.

5. Procédé selon la revendication 4, **caractérisé en ce que** l'étape d'affichage (20) du sommaire comprend également une étape de tri (24) des labels et des numéros de page associés, la dite étape de tri étant réalisée entre l'étape de lecture (22) et l'étape de création (26) du sommaire.

6. Procédé selon la revendication 5, **caractérisé en ce que** lors de la réalisation de l'étape de tri (24), les labels sont triés par ordre alphabétique.

7. Procédé selon la revendication 5, **caractérisé en ce que** lors de la réalisation de l'étape de tri (24), les labels sont triés par thème des labels.

8. Procédé selon l'une des revendications 4 à 7, **caractérisé en ce que**, pour réaliser l'étape d'affichage d'une page du sommaire (28) :
- on mémorise le sommaire dans une mémoire d'affichage, si le sommaire comprend une seule page, ou
- on mémorise la première page du sommaire dans la mémoire d'affichage, et on mémorise les autres pages du sommaire dans une deuxième mémoire tampon, si le sommaire comprend plusieurs pages.

9. Procédé selon l'une des revendications 1 à 8, **caractérisé en ce que** l'étape d'acquisition (10) comprend en outre la sous-étape suivante :
- réalisation d'un premier test (15), avant l'étape de mémorisation (16), pour savoir si l'étape de lecture (22) est en cours d'exécution, l'étape de mémorisation (16) étant effectuée si le premier test (15) est négatif.

10. Procédé selon l'une des revendications 1 à 9, **caractérisé en ce que** l'étape d'affichage du sommaire (20) comprend également la sous-étape suivante :
- réalisation d'un deuxième test (21), avant l'étape de lecture (22), pour savoir si l'étape de mémorisation (16) de labels est en cours d'exécution, l'étape de lecture (22) étant effectuée si le deuxième test (21) est négatif.

11. Dispositif récepteur de signaux de télévision, comprenant :
- une antenne (31) de réception pour recevoir des pages d'un service télétexte, l'antenne étant couplée à un démodulateur (34) par l'intermédiaire d'un récepteur (33) de signaux de télévision,
- un décodeur télétexte (32) couplé au démodulateur (34) et comprenant une mémoire d'affichage, et
- un écran comportant des moyens d'affichage pour lire et afficher le contenu de la mémoire d'affichage,
le dispositif étant **caractérisé en ce que** le décodeur (32) télétexte comprend également :
* des moyens d'acquisition comprenant :
- un moyen de réception d'une page télétexte dont l'ensemble des paquets de données (X0 à X31) comprend un premier paquet de données (X24) comportant au moins un label faisant référence à une autre page télétexte et un deuxième paquet de données (X27) associé au premier paquet (X24) et comportant un numéro de page associé à l'au moins un label,
- un moyen de décodage des premier et deuxième paquets de données (X24, X27) pour obtenir l'au moins un label et le numéro de page associé, et
- un moyen de mémorisation de 1'au moins un label et du numéro de page associé dans une mémoire tampon, et
* des moyens d'affichage du sommaire comprenant :
- un moyen de création du sommaire, le sommaire comprenant une ou plusieurs pages comprenant chacune une liste de labels et de numéros de pages associés mémorisés par les moyens d'acquisition, et
- un moyen d'affichage d'une page du sommaire.

12. Dispositif selon la revendication 11, **caractérisé en ce que** les moyens de mise en oeuvre du procédé comprennent un ensemble de portes logiques.

13. Dispositif selon la revendication 11, **caractérisé en ce que** les moyens de mise en oeuvre du procédé comprennent des moyens logiciels constitués d'un ensemble d'instructions mémorisé dans une mémoire du décodeur (32).

## Patentansprüche

1. Verfahren zum Anzeigen einer Inhaltsübersicht für Teletext auf einem Fernsehempfängerschirm, wobei das Teletextprogramm mehrere Teletextseiten aufweist und jede Teletextseite in Form einer Gruppe (X0 bis X31) von Datenpaketen übertragen wird, wobei das Verfahren **dadurch gekennzeichnet ist, dass** es umfasst:
einen Aquisitionsschritt (10) mit den folgenden Teilschritten:
Empfangen (12) einer Teletextseite, deren Gruppe von Datenpaketen (X0 bis X31) ein erstes Datenpaket (X24) mit wenigstens einem Label mit Bezug auf eine andere Teletextseite und ein zweites Datenpaket (X27) in Bezug zu dem ersten Datenpaket (X24) und mit einer Seitennummer in Bezug zu dem wenigstens einen Label umfasst,
Dekodieren (14) des ersten und des zweiten Datenpakets (X24, X27) zum Erfassen wenigstens eines Labels und der dazugehörigen Seitennummer und
Abspeichern (16) des wenigstens einen Labels und der dazugehörigen Seitennummer in einem Zwischenspeicher und einen Schritt zum Anzeigen der Inhaltsübersicht (20) auf Aufforderung des Nutzers mit den folgenden Teilschritten:
Erzeugen (26) der Übersicht, wobei die Übersicht eine oder mehrere Seiten umfasst, die jeweils eine Liste von Labeln und dazugehörigen, bei dem Aquisitionsschritt (10) gespeicherten Seitennummern umfassen, und
Anzeigen einer Inhaltsübersichtsseite (28).

2. Verfahren nach Anspruch 1, **dadurch gekennzeichnet, dass** der Aquisitionsschritt (10) mit den Teilschritten Empfangen (12), Dekodieren (14) und Abspeichern (16) bei jedem Empfang einer Teletextseite des Programms zyklisch durchlaufen wird, um den Inhalt des Zwischenspeichers zu aktualisieren.

3. Verfahren nach einem der Ansprüche 1 oder 2, **dadurch gekennzeichnet, dass** das erste Paket (X24) der empfangenen Teletextseite mehrere Label umfasst, wobei sich jedes Label auf eine andere Teletextseite bezieht, dass das zweite Paket (X27) der empfangenen Seite eine zu jedem Label des ersten Paketes (X24) gehörende Seitennummer umfasst, und dass mehrere Label und dazugehörige Seitennummern im Abspeicherungsschritt (16) gespeichert werden.

4. Verfahren nach Anspruch 1, **dadurch gekennzeichnet, dass** der Anzeigeschritt (20) außerdem einen Leseschritt (22) in dem Zwischenspeicher von Labeln und dazugehörigen Seitennummern umfasst, wobei der Leseschritt vor dem Erzeugen (26) der Übersicht erfolgt.

5. Verfahren nach Anspruch 4, **dadurch gekennzeichnet, dass** der Schritt (20) der Anzeige der Übersicht außerdem eine Sortierung (24) der Label und der dazugehörigen Seitennummern umfasst,
wobei die Sortierung zwischen dem Lesen (22) und dem Erzeugen (26) der Übersicht erfolgt.

6. Verfahren nach Anspruch 5, **dadurch gekennzeichnet, dass** bei der Durchführung der Sortierung (24) die Label in alphabetischer Reihenfolge angeordnet werden.

7. Verfahren nach Anspruch 5, **dadurch gekennzeichnet, dass** bei der Durchführung der Sortierung (24) die Label nach Thema des Labels angeordnet werden.

8. Verfahren nach einem der Ansprüche 4 bis 7, **dadurch gekennzeichnet, dass** zur Umsetzung der Anzeige einer Übersichtsseite (28):
die Übersicht in einem Anzeigespeicher abgespeichert wird, wenn die Übersicht nur eine einzige Seite aufweist, oder
die erste Seite der Übersicht in dem Anzeigespeicher abgespeichert wird und die anderen Seiten der Übersicht in einem zweiten Zwischenspeicher abgespeichert werden, wenn die Übersicht mehrere Seiten umfasst.

9. Verfahren nach einem der Ansprüche 1 bis 8, **dadurch gekennzeichnet, dass** der Aquisitionsschritt (10) außerdem den folgenden Teilschritt umfasst:
Durchführen eines ersten Tests (15) vor dem Abspeichern (16), um zu ermitteln, ob ein Lesevorgang (22) stattfindet, wobei die Abspeicherung (16) erfolgt, wenn der erste Test (15) ein negatives Ergebnis hat.

10. Verfahren nach einem der Ansprüche 1 bis 9, **dadurch gekennzeichnet, dass** das Anzeigen der Übersicht (20) außerdem den folgenden Teilschritt umfasst:
Durchführen eines zweiten Tests (21) vor dem Lesen (22), um zu ermitteln, ob ein Vorgang (16) der Abspeicherung von Labeln stattfindet, wobei das Lesen (22) erfolgt, wenn das Ergebnis des zweiten Tests (21) negativ ist.

11. Empfangsvorrichtung für Fernsehsignale mit:
einer Empfangsantenne (31) zum Empfangen von Seiten eines Teletextdienstes, wobei die Antenne über einen Fernsehsignalempfänger (33) mit einem Demodulator (34) verbunden ist,
einem Teletextdekodierer (32), der mit dem Demodulator (34) verbunden ist und einen ersten Anzeigespeicher umfasst, und einem Schirm mit Anzeigemitteln zum Lesen und Anzeigen des Inhalts des Anzeigespeichers,
wobei die Vorrichtung **dadurch gekennzeichnet ist, dass** der Teletextdekodierer (32) außerdem umfasst:
ein Mittel zum Empfangen einer Teletextseite, deren Gruppe von Datenpaketen (X0 bis X31) ein erstes Datenpaket (X24) mit wenigstens einem Label mit Bezug auf eine andere Teletextseite und ein zweites Datenpaket (X27) in Bezug zu dem ersten Datenpaket (X24) und mit einer Seitennummer in Bezug zu dem wenigstens einen Label umfasst,
ein Mittel zum Dekodieren des ersten und zweiten Datenpakets (X24, X27) zum Erfassen wenigstens eines Labels und der dazugehörigen Seitennummer und
ein Mittel zum Abspeichern des wenigstens einen Labels und der dazugehörigen Seitennummer in einem Zwischenspeicher und
ein Mittel zum Anzeigen der Inhaltsübersicht mit:
einem Mittel zum Erzeugen der Übersicht, wobei die Übersicht eine oder mehrere Seiten umfasst, die jeweils eine Liste von Labeln und dazugehörigen, bei dem Aquisitionsschritt (10) gespeicherten Seitennummern umfassen, und
einem Mittel zum Anzeigen einer Inhaltsübersichtsseite.

12. Vorrichtung nach Anspruch 11, **dadurch gekennzeichnet, dass** die Mittel zum Umsetzen des Verfahrens eine Gruppe von Logikgattern umfassen.

13. Vorrichtung nach Anspruch 11, **dadurch gekennzeichnet, dass** die Mittel zum Umsetzen des Verfahrens auf Software basieren, bei der eine Gruppe von Befehlen verwendet wird, die in einem Speicher des Dekodierers (32) abgelegt sind.

## Claims

1. Process for displaying the contents of a teletext programme on a television screen, the teletext program comprising several teletext pages, each teletext page being distributed in the form of a set (X0 to X31) of data packets, the process being **characterised in that** it comprises
* an acquisition stage (10) comprising the following sub-stages:
- reception (12) of a teletext page, in which the set of data packets (X0 to X31) comprises an initial data packet (X24) including at least one label referring to another teletext page and a second data packet (X27) associated with the first packet (X24) and including a page number associated with the at least one label,
- decoding (14) of the first and second data packets (X24, X27) to obtain the at least one label and the associated page number, and
- storage (16) of the at least one label and the associated page number in a buffer memory, and
* a contents display stage (20), performed at the user's request and comprising the following sub-stages:
- creation (26) of the contents, the contents comprising one or more pages, each comprising a list of labels and the associated page numbers stored during the acquisition stage (10), and
- a contents page display (28).

2. Process as in Claim 1, **characterised in that** the acquisition stage (10), comprising the sub-stages of reception (12), decoding (14) and storage (16), is performed cyclically, each time a programme teletext page is received, to update the buffer memory.

3. Process as in either of Claims 1 and 2, **characterised in that** the first packet (X24) of the received teletext page comprises a number of labels, each label referring to another teletext page, **in that** the second packet (X27) of the received page includes a page number associated with each label of the first packet (X24), and **in that** a number of labels and associated page numbers are stored during the storage stage (16).

4. Process as in Claim 1, **characterised in that** the display stage (20) also comprises a reading stage (22), in the buffer memory, for the labels and associated page numbers, the said reading stage being executed before the contents creation stage (26).

5. Process as in Claim 4, **characterised in that** the contents display stage (20) also comprises a stage (24) for sorting the labels and associated page numbers, the said sorting stage being executed between the reading stage (22) and the contents creation stage (26).

6. Process as in Claim 5, **characterised in that** during the execution of the sorting stage (24), the labels are sorted by alphabetical order.

7. Process as in Claim 5, **characterised in that** during the execution of the sorting stage (24), the labels are sorted by label topic.

8. Process as in any of Claims 4 to 7, **characterised in that**, to execute the contents page display stage:
- the contents are stored in a display memory, if the contents comprise but a single page, or
- the first page of the contents is stored in the display memory, and the remaining pages of the contents are stored in a second buffer memory, if the contents comprise a number of pages.

9. Process as in any of Claims 1 to 8, **characterised in that** the acquisition stage (10) also comprises the following sub-stage:
- execution of an initial test (15) before the storage stage (16), to establish whether the reading stage (22) is in progress, the storage stage (16) being executed if the initial test (15) is negative.

10. Process as in any of Claims 1 to 9, **characterised in that** the contents display stage (20) also comprises the following sub-stage:
- execution of a second test (21) before the reading stage (22), to establish whether the label storage stage (16) is in progress, the reading stage being executed if the second test (21) is negative.

11. Television signal receiving device, comprising:
- a receiving antenna (31) to receive the pages of a teletext service, the antenna being coupled to a demodulator (34) via a television signal receiver (33),
- a teletext decoder (32) coupled to the demodulator (34) and including a display memory, and
- a screen including display devices to read and display the contents of the display memory,
the device being **characterised in that** the teletext decoder (32) also comprises:
* acquisition devices, comprising:
- a device for receiving a teletext page, including the set of data packets (X0 to X31), comprising an initial data packet (X24) including at least one label referring to another teletext page and a second data packet (X27) associated with the first packet (X24) and including a page number associated with the at least one label,
- a device for decoding the first and second data packets (X24, X27) to obtain the at least one label and the associated page number, and
- a device for storing the at least one label and the associated page number in a buffer memory, and
* devices for displaying the contents, comprising:
- a device for creating the contents, the contents comprising one or more pages each comprising a list of labels and associated page numbers stored by the acquisition devices, and
- a device for displaying a contents page.

12. Device as in Claim 11, **characterised in that** the devices for implementing the process comprise a set of logic gates.

13. Device as in Claim 11, **characterised in that** the devices for implementing the process comprise software devices formed from a set of instructions stored in a decoder memory (32).
